# EUROPÄISCHE PATENTSCHRIFT

(11) **EP 3 445 986 B1**
(45) Veröffentlichungstag und Bekanntmachung des Hinweises auf die Patenterteilung: **10.06.2020**
(21) Anmeldenummer: 17722676.8
(22) Anmeldetag: 21.04.2017
(51) Int. Cl.: F16D 23/06

(54) **SCHIEBEMUFFE FÜR EINE SYNCHRONISIERUNGSEINRICHTUNG EINES GETRIEBES SOWIE SYNCHRONISIERUNGSEINRICHTUNG MIT DER SCHIEBEMUFFE**
SLIDING SLEEVE FOR A SYNCHRONIZING DEVICE OF A TRANSMISSION, AND SYNCHRONIZING DEVICE HAVING THE SLIDING SLEEVE
MANCHON COULISSANT POUR DISPOSITIF DE SYNCHRONISATION D'UNE BOÎTE DE VITESSE ET DISPOSITIF DE SYNCHRONISATION COMPRENANT LE MANCHON COULISSANT

(30) Priorität: 22.04.2016 DE 102016206873
(43) Veröffentlichungstag der Anmeldung: 27.02.2019
(73) Patentinhaber: Schaeffler Technologies AG & Co. KG, 91074 Herzogenaurach (DE)
(72) Erfinder: JABS, Waldemar, 33803 Steinhagen (DE); NEUHAUS, Jennifer, 33619 Bielefeld (DE)
(86) Internationale Anmeldenummer: PCT/DE2017/100325
(87) Internationale Veröffentlichungsnummer: WO 2017/182039

(56) Entgegenhaltungen:
- EP-A1- 2 639 470
- DE-B3-102012 109 398
- JP-A- S57 120 729
- US-A- 4 069 903

## Beschreibung

Die Erfindung betrifft eine Schiebemuffe für eine Synchronisierungseinrichtung eines Kraftfahrzeuggetriebes mit den Merkmalen des Oberbegriffs des Anspruchs 1. Die Erfindung betrifft ferner eine Synchronisierungseinrichtung mit der Schiebemuffe.

In Getrieben von Fahrzeugen werden Synchronisierungseinrichtungen eingesetzt, um eine Welle und ein Gangrad auf eine gleiche Drehzahl zu bringen und nach diesem Synchronisieren drehfest zu koppeln. Dazu ist in der Regel ein Trägerkörper, auch Synchronkörper oder Muffenträger genannt, auf der Welle angeordnet, welcher eine Außenverzahnung aufweist. Auf dem Trägerkörper ist eine Schiebemuffe mit einer Innenverzahnung angeordnet, die in die Außenverzahnung so eingreift, dass die Schiebemuffe in axialer Richtung relativ zu dem Trägerkörper verschoben werden kann.

Das Gangrad ist auf der Welle als ein Losrad angeordnet. Zum drehfesten Koppeln mit der Schiebemuffe kann es selbst eine Außenverzahnung aufweisen. Alternativ ist ein Kupplungskörper drehfest an dem Gangrad verbunden, welcher eine mit der Schiebemuffe in Eingriff bringbare Außenverzahnung aufweist. Bei einem Schaltvorgang wird die Schiebemuffe in axialer Richtung bewegt, sodass die Innenverzahnung mit der Außenverzahnung des Kupplungskörpers in Eingriff kommt, sodass eine formschlüssige und drehfeste Verbindung zwischen der Welle und dem Gangrad gebildet ist.

Um die Drehzahlen der Welle und des Gangrads vorab anzugleichen, sind zwischen dem Trägerkörper und dem Kupplungskörper bzw. dem Gangrad ein oder mehrere Synchronringe angeordnet. Durch das axiale Verschieben der Schiebemuffe wird durch die Synchronring zunächst ein Reibschluss hergestellt und damit das Gangrad auf die Drehzahl der Welle beschleunigt beziehungsweise abgebremst, bevor der Kupplungskörper mit der Schiebemuffe und damit mit der Welle formschlüssig verbunden werden.

Die axiale Verschiebung der Schiebemuffe muss jedoch begrenzt werden, um ein Überschalten und damit eine Beschädigung der Verzahnung und anderer Bauteile zu verhindern. Hierzu gibt es verschiedene Ansätze: So ist es möglich, dass zwischen den Synchronringen und dem Kupplungskörper eine Scheibe angeordnet wird, welche einen Anschlag bildet.

Aus der Druckschrift DE 10 2012 223 761 A1 ist eine Schiebemuffe eines Gangräderwechselgetriebes mit einer Innenverzahnung bekannt. Die Schiebemuffe weist zwei unterschiedliche Zahnarten auf, wobei die eine Zahnart bestimmungsgemäß in die Außenverzahnung eines Kupplungskörpers eingreifen soll und die zweite Zahnart einen axialen Anschlag bei der axialen Verschiebung der Schiebemuffe bildet.

DE 101 64 203 C1 zeigt eine gattungsbildende Schiebemuffe, bei der einige Zähne als Anschlagzähne ausgebildet sind und zu diesem Zweck radial nach innen vorstehende Anschläge zur Begrenzung des Schaltwegs aufweisen.

In US 4 0699 903 A wird eine Schiebemuffe mit versetzten Begrenzungszähnen gezeigt.

Nachteilig an den so ausgeführten Anschlagszähnen ist, dass sie aufgrund ihrer veränderten Formgebung aufwändig herzustellen sind. Sind die Anschlagzähne spanend hergestellt, muss bei einer größeren Zahnhöhe ein stärkerer Abtrag an den übrigen Zähnen erfolgen, was den Materialaufwand und Zeitaufwand erhöht. Sind die Anschlagzähne umformtechnisch hergestellt, sind Fertigungstoleranzen kritisch. So müssen aufgrund dieser Toleranzen die Zahnflanken in der Regel außer Eingriff genommen werden, um ein Anschlagen des Kupplungskörpers mit seinen Dachspitzen in jedem Fall zu verhindern.

Es ist Aufgabe der vorliegenden Erfindung, eine Schiebemuffe mit verbesserten Funktionseigenschaften sowie eine entsprechende Synchronisierungseinrichtung mit der Schiebemuffe vorzuschlagen.

Diese Aufgabe wird durch eine Schiebemuffe mit den Merkmalen des Anspruchs 1 sowie durch eine Synchronisierungseinrichtung mit den Merkmalen des Anspruchs 8 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Schiebemuffe, welche für eine Synchronisierungseinrichtung eines Getriebes ausgebildet ist. Bei dem Getriebe handelt es sich besonders bevorzugt um ein Fahrzeuggetriebe zur Übertragung eines Antriebsdrehmoments für das Fahrzeug. Das Getriebe kann als ein Automatikgetriebe oder als ein manuell zu schaltendes Getriebe ausgebildet sein. Im Speziellen ist das Getriebe als ein Gangräderwechselgetriebe ausgebildet. Die Synchronisierungseinrichtung hat die Aufgabe, eine Welle des Getriebes mit einem Gangrad, welches als ein Losrad auf der Welle angeordnet ist, hinsichtlich der Drehzahl zu synchronisieren und drehfest zu setzen oder zu koppeln.

Die Schiebemuffe weist einen Grundkörper auf, wobei der Grundkörper als ein Ringkörper ausgebildet ist. Insbesondere ist der Grundkörper koaxial und/oder konzentrisch zu der Welle des Getriebes angeordnet. Die Welle und/oder der Grundkörper definiert eine Hauptachse.

Auf dem Grundkörper sind Teilungspositionen definiert, welche im Abstand einer Teilung (t) in Umlaufrichtung um die Hauptachse regelmäßig verteilt sind. Betrachtet man den Grundkörper und/oder Ringkörper in axialer Draufsicht als einen Kreis, so bilden die Teilungspositionen eine Unterteilung des Kreises in gleichgroße Kreisbögen. Vorzugsweise ist die Teilung als der Abstand, insbesondere Bogenlängenabstand oder Winkelabstand, und/oder als das Produkt aus dem Modul m und der Zahl pi (t = m*pi) definiert. Das Modul m ist als der Quotient des Teilkreisdurchmessers und der Zähnezahl (m = d/z) definiert. Die Teilungspositionen dienen ähnlich wie Hilfslinien zur Beschreibung der Anordnung der nachfolgend eingeführten Eingriffszähne beziehungsweise Begrenzungszähne.

Die Schiebemuffe weist eine Mehrzahl von Eingriffszähnen auf, wobei die Eingriffszähne als Innenzähne ausgebildet sind. Insbesondere sind die Eingriffszähne radial nach innen gerichtet. Vorzugsweise erstrecken sich die Eingriffszähne mit ihrem Zahnrücken jeweils in axialer Richtung zu der Hauptachse und/oder sind gleichgerichtet und/oder parallel zu der Hauptachse ausgerichtet. Es ist vorgesehen, dass jeder der Eingriffszähne auf einer Teilungsposition angeordnet ist. Es ist jedoch nicht zwingend notwendig, dass jede Teilungsposition mit einem Eingriffszahn versehen ist. So ist es durchaus möglich, dass Teilungspositionen als Zahnlücken ausgebildet sind und/oder andere Komponenten tragen. Es ist jedoch vorgesehen, dass die Schiebemuffe mindestens einen Eingriffsbereich aufweist, in dem mindestens zwei Eingriffszähne auf in Umlaufrichtung benachbarten Teilungspositionen angeordnet sind. Durch den kleinsten Abstand zweier Eingriffszähne wird vorzugsweise die Teilung definiert. Vorzugsweise umfasst die Schiebemuffe mindestens zwei Eingriffsbereiche, wobei jeder der Eingriffsbereiche mindestens zwei, vorzugsweise mindestens vier Eingriffszähne aufweist, welche jeweils auf in Umlaufrichtung benachbarten Teilungspositionen angeordnet sind.

Ferner weist die Schiebemuffe mindestens einen Begrenzungszahn zur Begrenzung einer axialen Bewegung der Schiebemuffe auf. Der Begrenzungszahn ist zwischen zwei Teilungspositionen angeordnet. Insbesondere ist der Begrenzungszahn zumindest bereichsweise in Umlaufrichtung betrachtet, in einer realen oder gedachten Zahnlücke zwischen zwei Teilungspositionen angeordnet. Die Zahnlücke wird gebildet, indem auf die zwei Teilungspositionen jeweils ein Eingriffszahn gedanklich gesetzt wird, sodass die Zahnlücke dargestellt ist. Der Begrenzungszahn ragt zumindest bereichsweise in die Zahnlücke hinein. Damit stellt der Begrenzungszahn eine Störkontur für eine Gegenverzahnung dar, welche die gleiche Teilung wie der Grundkörper aufweist, sodass bei einem Einschieben der Schiebemuffe auf eine Gegenverzahnung mit der gleichen Teilung der Begrenzungszahn die axiale Bewegung der Schiebemuffe begrenzt.

Im Rahmen der Erfindung wird vorgeschlagen, dass das Zahnprofil in einer Schnittebene, insbesondere Radialebene, welche in Bezug auf eine axiale Richtung der Hauptachse durch den Begrenzungszahn vorzugsweise mittig verläuft, bei dem Begrenzungszahn und bei mindestens einem der Eingriffszähne gleich ausgebildet ist. Vorzugsweise weisen der Begrenzungszahn und der mindestens eine Eingriffszahn, insbesondere einige der Eingriffszähne und vorzugsweise alle der Eingriffszähne, das gleiche Zahnprofil auf. Es ist besonders bevorzugt, dass sich das Zahnprofil von Eingriffszahn und Begrenzungszahn nicht nur in einer Schnittebene gleicht, sondern dass das Zahnprofil bei dem Begrenzungszahn und dem mindestens einen der Eingriffszähne über einen breiteren axialen Bereich, wie zum Beispiel mindestens 3 Millimeter, vorzugsweise mindestens 5 Millimeter und insbesondere mindestens 10 Millimeter gleicht.

Es ist dabei eine Überlegung der Erfindung, dass bei einer gleichen Ausbildung von Begrenzungszahn und Eingriffszahn der Begrenzungszahn als vollwertiger Zahn zur Übertragung eines Drehmoments eingesetzt werden kann. Dadurch wird die Anzahl der Zähne in Umlaufrichtung der Schiebemuffe durch die Anzahl der Begrenzungszähne gegenüber Ausführungen gemäß des Stands der Technik erhöht, sodass die erfindungsgemäße Schiebemuffe ein höheres Drehmoment übertragen kann. Zudem wird die Biegesteifigkeit im Vergleich zum Stand der Technik verringert. Durch die Angleichung des Zahnprofils des Begrenzungszahns an das Zahnprofil der Eingriffszähne wird zudem erreicht, dass der Begrenzungszahn bei einer Belastung bei der Übertragung des Drehmoments das gleiche Verhalten wie die Eingriffszähne aufweist, sodass auch keine lokalen Verformungen oder Abweichungen im dynamischen Verhalten der Schiebemuffe bei dem Begrenzungszahn zu erwarten ist.

Die Geradverzahnung der Begrenzungszähne kann damit weiterhin genutzt werden, um Drehmoment zwischen dem Trägerkörper und dem Gangrad zu übertragen. Dadurch bekommt der Trägerkörper mehr Zähne in Eingriff und wird entlastet.

Aufgrund der versetzten Zahngeometrie kann die Biegesteifigkeit zunächst geringfügig erhöht sein. Dem Effekt lässt sich entgegenwirken, wenn in einer Ausbildung der Erfindung der Begrenzungszahn axialer Richtung verkürzt ausgebildet ist.

Bei der Erfindung ist der Begrenzungszahn zur Teilung der Eingriffsverzahnung versetzt angeordnet. Bevorzugt beträgt der Versatz in Umlaufrichtung zwischen dem 1,1-fachen der Teilung und dem 1,9-fachen der Teilung des Grundkörpers. Vorzugsweise ist der Begrenzungszahn in Umlaufrichtung mittig zwischen den zwei benachbarten Eingriffszähnen angeordnet. Vorzugsweise weisen die zwei benachbarten Eingriffszähne zueinander einen Abstand von drei Teilungen auf, wobei der Begrenzungszahn zu jedem der benachbarten Eingriffszähne einen Abstand von 1,5 Teilungen, gerechnet von einer Mitte des Begrenzungszahns in Umlaufrichtung aufweist.

Bei einer bevorzugten Realisierung der Erfindung ist der Begrenzungszahn als ein geradverzahnter Zahn ausgebildet, welcher besonders bevorzugt in axialer Richtung über mindestens 50 Prozent seiner Länge, insbesondere über mindestens 80 Prozent seiner Länge ein konstantes Zahnprofil aufweist. Insbesondere erstreckt sich der Begrenzungszahn in axialer Richtung zu der Hauptachse.

Bei einer bevorzugten Weiterbildung der Erfindung ist der Begrenzungszahn im Vergleich zu einem der Eingriffszähne in mindestens einer axialen Richtung, vorzugsweise in beide axialen Richtungen, verkürzt. Somit ist eine axiale Stirnfläche des Begrenzungszahns in axialer Richtung gegenüber einem freien Ende eines der Eingriffszähne zurückgesetzt. Vorzugsweise sind beide Enden des Begrenzungszahns gegenüber den freien Enden der Eingriffszähne zurückgesetzt. Diese Ausgestaltung resultiert aus der Überlegung, dass die Schiebemuffe bis zu einer vorzugebenden Überdeckung mit den Eingriffszähnen in eine Kupplungsverzahnung eines Kupplungsabschnitts eingefahren werden muss, um eine drehfeste Kopplung zu erreichen. Da der Begrenzungszahn zur Begrenzung der axialen Bewegung der Schiebemuffe dient, muss dementsprechend die axiale Stirnseite des Begrenzungszahns gegenüber den Eingriffszähnen zurückgesetzt sein.

Bei einer bevorzugten Weiterbildung der Erfindung weist der Begrenzungszahn in mindestens einer axialen Richtung eine Begrenzungsfläche auf, welche die axiale Stirnfläche bildet. Besonders bevorzugt erstreckt sich die Begrenzungsfläche in einer Radialebene zu der Hauptdrehachse. In dieser Ausgestaltung kann vorgesehen sein, dass die Eingriffszähne in die Außenverzahnung des Kupplungsabschnitts einfahren können, die Begrenzungsfläche jedoch in axialer Richtung an die Außenverzahnung, insbesondere an eine Stirnseite der Außenverzahnung, flächig anstößt und so die axiale Bewegung der Schiebemuffe mittels eines Endanschlags begrenzt. Der Zahn ist in einer Variante stumpf ausgebildet.

Ein weiterer Gegenstand der Erfindung betrifft eine Synchronisierungseinrichtung für das Getriebe. Die Synchronisierungseinrichtung weist die Schiebemuffe auf, wie diese zuvor beschrieben wurde. Ferner wird ein Trägerkörper umfasst, wobei der Trägerkörper drehfest auf einer Welle des Getriebes angeordnet ist. Optional bildet die Welle einen Teil der Synchronisierungseinrichtung bzw. der Klauenkupplung. Beispielsweise ist der Trägerkörper mit der Welle verzahnt. Der Trägerkörper weist eine Trägerverzahnung auf, welche als eine Außenverzahnung ausgebildet ist. Die Außenverzahnung steht mit den Eingriffszähnen der Schiebemuffe zur Drehmomentübertragung in Eingriff. Somit sind der Trägerkörper und die Schiebemuffe miteinander in Umlaufrichtung drehfest verbunden.

Ferner ist mindestens ein Kupplungsabschnitt vorgesehen, wobei der Kupplungsabschnitt applikationsabhängig drehfest mit einem Gangrad bei der Synchronisierungseinrichtung oder mit einem Klauenabschnitt bei einer als Klauenkupplung ausgebildeten Synchronisierungseinrichtung verbunden ist. Der Kupplungsabschnitt trägt eine Kupplungsverzahnung, welche ebenfalls als eine Außenverzahnung ausgebildet ist. Die Kupplungsverzahnung, insbesondere die Zähne der Kupplungsverzahnung, sind in der Teilung der Eingriffszähne und/oder der Teilungspositionen angeordnet. Dadurch ist es möglich, die Schiebemuffe auf den Kupplungsabschnitt aufzuschieben, sodass der Kupplungsabschnitt und damit das Gangrad beziehungsweise der Klauenabschnitt mit dem der Kupplungsverzahnung sind in der Teilung der Eingriffszähen angeordnet.

In dieser Ausgestaltung ist es möglich, dass die Schiebemuffe auf den Kupplungsabschnitt in axialer Richtung aufgeschoben werden kann, sodass eine drehfeste Verbindung zwischen dem Gangrad über den Kupplungsabschnitt, die Schiebemuffe, dem Trägerkörper zu der Welle hergestellt werden kann. Alternativ hierzu kann eine drehfeste Verbindung zwischen dem Klauenabschnitt, dem Kupplungsabschnitt, der Schiebemuffe, dem Trägerkörper und der Welle hergestellt werden.

Es ist bevorzugt vorgesehen, dass die Trägerverzahnung mit dem mindestens einen Begrenzungszahn zur Drehmomentübertragung in Eingriff steht. Somit wird der Begrenzungszahn genutzt, um das Drehmoment oder zumindest einen Teil davon von der Welle über die Schiebmuffe auf das Gangrad beziehungsweise den Klauenabschnitt zu übertragen. Auf diese Weise wird die Tragfähigkeit der Schiebemuffe durch den Begrenzungszahn erhöht.

Bei einer bevorzugten Auslegung der Synchronisierungseinrichtung und/oder der Klauenkupplung wird das Drehmoment gleichmäßig auf die Zähne der Schaltmuffe verteilt, wobei die Zähne die Eingriffszähne sowie den mindestens einen Begrenzungszahn umfassen. Insbesondere sind die drehmomentübertragenden Zähne der Schaltmuffe auf die Eingriffszähne und den oder die Begrenzungszähne begrenzt.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine schematische, dreidimensionale radiale Draufsicht auf eine Synchronisierungseinrichtung als ein Ausführungsbeispiel der Erfindung;
Figur 2 eine stark schematisierte axiale Draufsicht auf die Schiebemuffe der Synchronisierungseinrichtung in der Figur 1 zur Erläuterung der Position der Zähne;
Figur 3 eine schematische, dreidimensionale axiale Draufsicht auf den Kontaktbereich zwischen der Schiebemuffe und dem Kupplungsabschnitt;
Figur 4 eine radiale, teilgeschnittene Draufsicht auf einen der Begrenzungszähne der Schiebemuffe der vorhergehenden Figuren.

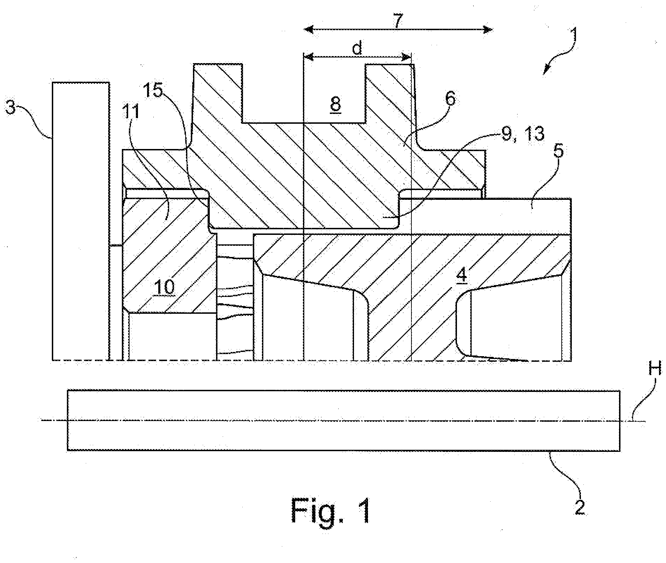

Die Figur 1 zeigt in stark schematisierter Weise eine Synchronisierungseinrichtung 1 für ein Getriebe eines Fahrzeugs zur Übertragung eines Traktionsmoments des Fahrzeugs. Die Synchronisierungseinrichtung 1 hat die Funktion, ein Drehmoment von einer Welle 2, welche nur schematisiert dargestellt ist, auf ein Gangrad 3, welches ebenfalls nur schematisiert dargestellt ist, selektiv zu leiten. Insbesondere dient die Synchronisierungseinrichtung 1 dazu, einen Momentenpfad zwischen der Welle 2 und dem Gangrad 3 zu öffnen und zu schließen. Ferner dient die Synchronisierungseinrichtung 1 dazu, eine Drehzahl des Gangrads 3 an eine Drehzahl der Welle 2 anzugleichen. Die Synchronisierungseinrichtung 1 kann nur ein Gangrad 3 oder auf jeder Seite ein Gangrad 3 aufweisen.

Die Synchronisierungseinrichtung 1 weist einen Trägerkörper 4 auf, welcher drehfest auf der Welle 2 aufgesetzt ist. Beispielsweise ist der Trägerkörper 4 über eine Verzahnung mit der Welle 2 drehfest verbunden. Der Trägerkörper 4 weist eine Trägerverzahnung 5 auf, welche als eine Außenverzahnung ausgebildet ist und welche eine Mehrzahl von in axialer Richtung zu der Welle 2 und/oder zu einer durch die Welle 2 definierten Hauptachse H axial ausgerichtet sind.

Auf dem Trägerkörper 4 ist eine Schiebemuffe 6 angeordnet, welche in axialer Richtung zu der Hauptachse H gemäß dem Pfeil 7 verschiebbar ist. Die Schiebemuffe 6 weist eine umlaufende Nut 8 für den Eingriff einer Schaltgabel oder ein ähnliches Schaltorgan auf. Die Schiebemuffe 6 ist als ein Ringkörper ausgebildet, welcher koaxial und/oder konzentrisch zu der Hauptachse H und/oder zu der Welle 2 angeordnet ist. An seiner radialen Innenseite trägt die Schiebemuffe Zähne 9, welche sich ebenfalls in axialer Richtung zu der Hauptachse H erstrecken und mit der Trägerverzahnung 5 in Eingriff stehen, sodass ein Drehmoment von der Welle 2 über den Trägerkörper 4 in die Schiebemuffe 6 eingeleitet werden kann. Es ist auch möglich, dass das Drehmoment in Gegenrichtung geleitet wird.

In der in Figur 1 dargestellten Schaltposition ist die Schiebemuffe 6 um einen Betrag d nach links ausgelenkt und steht in Eingriff mit einem Kupplungsabschnitt 10, welcher drehfest mit dem Gangrad 3 verbunden ist. Der Kupplungsabschnitt 10 weist eine Kupplungsverzahnung 11 auf, welche als eine Außenverzahnung ausgebildet ist, wobei die Zähne 9 der Schiebemuffe 6 zumindest zum Teil mit der Kupplungsverzahnung 11 in Eingriff stehen. Somit wird über die Schiebemuffe 6 der Kupplungsabschnitt 10 und damit das Gangrad 3 mit dem Trägerkörper 4 und damit mit der Welle 2 in Umlaufrichtung um die Hauptachse H drehfest verbunden.

Nicht dargestellt ist ein Synchronringpaket, welches zwischen dem Trägerkörper 4 und dem Kupplungsabschnitt 10 angeordnet ist und welches die Funktion hat, bei einem axialen Verschieben der Schiebemuffe 6 die Drehzahlen des Trägerkörpers 4 und des Gangrads 3 mittels Reibschluss zu synchronisieren.

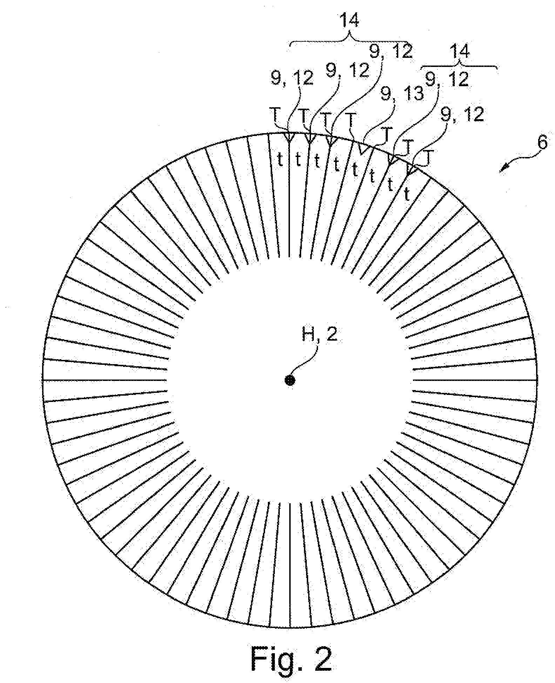

In der Figur 2 ist die Schiebemuffe 6 stark schematisiert in einer axialen Draufsicht gezeigt. In der axialen Draufsicht ist nochmals zu erkennen, dass diese koaxial zu der Hauptachse H beziehungsweise Welle 2 angeordnet ist. Die Zähne 9 können in zwei Arten von Zähnen unterteilt werden, nämlich in Eingriffszähne 12 und Begrenzungszähne 13. Zur Verteilung der Zähne 9 in Umfangsrichtung um die Hauptachse H wird zunächst eine Teilung t und Teilungspositionen T definiert, wobei die Schiebemuffe 6 in Umfangsrichtung in gleich große Kreissegmente unterteilt wird, wobei die Kreissegmente jeweils eine Teilung t aufweisen durch die die Teilungspositionen T voneinander beabstandet sind. Unter einer Teilung wird eine Bogenlänge oder ein Winkel in Umfangsrichtung um die Hauptachse H verstanden.

Die Schiebemuffe 6 weist mindestens einen Eingriffsbereich 14 auf, wobei in dem Eingriffsbereich 14 eine Mehrzahl von Eingriffszähnen 12 in dem Abstand der Teilung t an den Teilungspositionen T angeordnet sind. Damit definiert die Teilung t den kürzesten Abstand (Bogenlänge oder Winkel) der Eingriffszähne 12.

Nachdem die Schiebemuffe 6 mit den Eingriffszähnen 12 in die Kupplungsverzahnung 11 eingreifen soll, und zwar wahlfrei in Bezug auf die Umlaufrichtung, weist auch die Kupplungsverzahnung 11 die gleiche Teilung t auf. Die Begrenzungszähne 13 sind dagegen außerhalb der Teilung t und/oder neben einer der Teilungspositionen T angeordnet. Bildlich gesprochen sind die Begrenzungszähne 13 in einer Zahnlücke zwischen den Eingriffszähnen 12 angeordnet. Wie aus der Figur 2 zu entnehmen ist, ist der Abstand zwischen dem Begrenzungszahn 13 und dem benachbarten Eingriffszahn 12 eine 1,5-fache Teilung t. Somit ist der Begrenzungszahn 13 in Umlaufrichtung so angeordnet, dass dieser nicht in die Kupplungsverzahnung 11 eingeschoben werden kann.

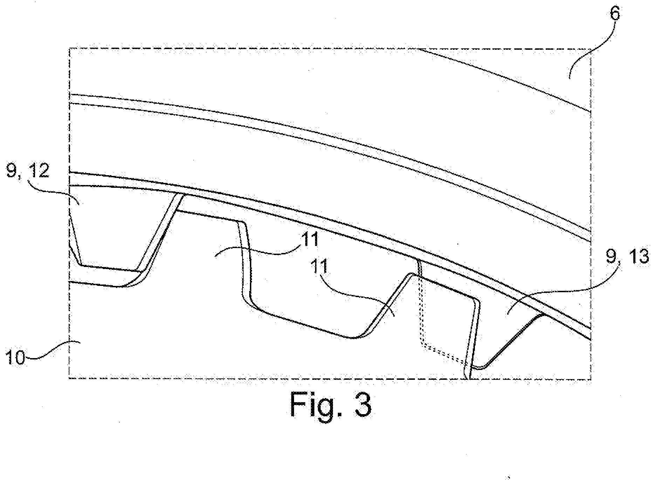

Dieser Sachverhalt ist in der Figur 3 in einer axialen Draufsicht auf den Kontaktbereich zwischen dem Kupplungsabschnitt 10 und der Schiebemuffe 6 beziehungsweise den Zähnen 9 der Schiebemuffe 6 nochmals dargestellt. Mit dem kleineren Teilkreisdurchmesser ist die Kupplungsverzahnung 11 zu erkennen, welche die Teilung t aufweist. Mit dem größeren Teilkreisdurchmesser ist dagegen die Innenverzahnung der Schiebemuffe 6 zu erkennen, wobei der Abstand zwischen dem Eingriffszahn 12 und dem Begrenzungszahn 13 1,5 t beträgt. Dadurch wird der Begrenzungszahn 13 nicht in einer Zahnlücke zwischen zwei Zähnen der Kupplungsverzahnung 11 angeordnet, sondern bildet bei dem Einschieben der Zähne 9 in axialer Richtung in die Kupplungsverzahnung 11 eine unüberwindbare Störkontur, wie dies in der axialen Draufsicht zu erkennen ist. Dadurch nimmt der Begrenzungszahn 13 oder die Mehrzahl an Begrenzungszähnen 13 die Aufgabe ein, eine axiale Bewegung der Schiebemuffe 6 in Richtung des Kupplungsabschnitts 10 beziehungsweise Gangrades 3 als Endanschlag zu begrenzen.

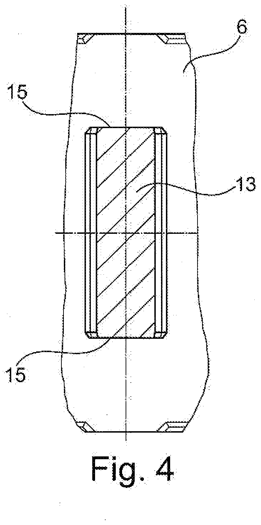

In der Figur 4 ist einer der Begrenzungszähne 13 in einer radialen Draufsicht gezeigt. Es ist zu erkennen, dass der Begrenzungszahn 13 in axialer Richtung zwei Begrenzungsflächen 15 aufweist, welche in einer Radialebene zu der Hauptdrehachse H ausgerichtet sind. Mit diesen Begrenzungsflächen 15 stößt der Begrenzungszahn 13 in axialer Richtung gegen die Kupplungsverzahnung 11, sodass der Endanschlag gebildet ist. In axialer Erstreckung sind die Begrenzungszähne 13 kürzer als die Eingriffszähne 12 ausgebildet, wobei der Unterschied in axialer Erstreckung dazu dient, dass der Eingriffszahn 12 beziehungsweise die Eingriffszähne 13 in die Kupplungsverzahnung 11 formschlüssig eingreifen können, um die drehfeste Verbindung herzustellen.

Es ist zu erkennen, dass der Begrenzungszahn 13 entlang seiner axialen Erstreckung zumindest zu 90 Prozent ein konstantes Zahnprofil aufweist. Das Zahnprofil des Begrenzungszahns 13 ist identisch zu dem Zahnprofil der Eingriffszähne 12 ausgebildet.

Der Trägerkörper 4 beziehungsweise die Trägerverzahnung 5 ist so ausgebildet, dass sowohl die Eingriffszähne 12 als auch die Begrenzungszähne 13 zur Drehmomentübertragung genutzt werden. Somit weist die Trägerverzahnung 5 Zähne zum Eingriff in die Eingriffszähne 12 und in die Begrenzungszähne 13 auf. Dadurch, dass das Zahnprofil bei den Begrenzungszähnen 13 und den Eingriffszähnen 12 identisch oder baugleich ausgebildet ist, weisen diese bei dem Eingriff mit der Trägerverzahnung 5 auch die gleichen dynamischen und statischen Eigenschaften auf, sodass die Begrenzungszähne 13 als vollwertige Zähne 9 zur Übertragung von Drehmoment zwischen dem Trägerkörper 4 und der Schiebemuffe 6 genutzt werden können. Insbesondere sind die Zähne 9 so ausgebildet, dass über die Begrenzungszähne 13 und die Eingriffszähne 12 ein jeweils gleich hohes Drehmoment übertragen werden kann.

Durch die geschilderte Ausgestaltung der Schiebemuffe 6 können die Begrenzungszähne 13 zur Drehmomentübertragung genutzt werden, sodass die Lücken zwischen den Eingriffszähnen 12, welche nicht für die Drehmomentübertragung genutzt werden, verringert sind. Dadurch wird die Tragfähigkeit der Schiebemuffe 6 erhöht. Dadurch, dass das Zahnprofil der Eingriffszähne 12 und der Begrenzungszähne 13 gleich ausgebildet sind, ergibt sich in Umfangsrichtung um die Hauptachse H auch eine gleichmäßige oder zumindest nahezu gleichmäßige Drehmomentübertragung.

### Bezugszeichenliste

- 1: Synchronisierungseinrichtung
- 2: Welle
- 3: Gangrad
- 4: Trägerkörper
- 5: Trägerverzahnung
- 6: Schiebemuffe
- 7: Pfeil
- 8: Nut
- 9: Zähne
- 10: Kupplungsabschnitt
- 11: Kupplungsverzahnung
- 12: Eingriffszähne
- 13: Begrenzungszähne
- 14: Eingriffsbereich
- 15: Begrenzungsflächen
- H: Hauptachse
- d: Betrag
- t: Teilung

## Patentansprüche

1. Schiebemuffe (6) für eine Synchronisierungseinrichtung (1) oder Klauenkupplung eines Getriebes,
wobei die Schiebemuffe (6) als ein Ringkörper ausgebildet ist und eine Hauptachse (H) definiert, wobei auf dem Ringkörper Teilungspositionen (T) definiert sind, wobei die Teilungspositionen (T) im Abstand einer Teilung (t) um die Hauptachse (H) regelmäßig verteilt sind,
mit einer Mehrzahl von Eingriffszähnen (12), die als Innenzähne ausgebildet sind, wobei jeder der Eingriffszähne (12) auf einer Teilungsposition (T) angeordnet ist, wobei die Schiebemuffe (6) mindestens einen Eingriffsbereich (14) aufweist, in dem mindestens zwei Eingriffszähne (12) auf in Umlaufrichtung benachbarten Teilungspositionen (T) angeordnet sind,
mit mindestens einem Begrenzungszahn (13) zur Begrenzung einer axialen Bewegung der Schiebemuffe (6), wobei der Begrenzungszahn (13) zumindest bereichsweise in einer Lücke zwischen zwei Teilungspositionen (T) angeordnet ist, wobei
das Zahnprofil in einer Schnittebene, welche in Bezug auf eine axiale Richtung mittig durch den Begrenzungszahn (13) verläuft bei dem Begrenzungszahn (13) und bei mindestens einem der Eingriffszähne (12) gleich ausgebildet ist,
**dadurch gekennzeichnet, dass**
der Begrenzungszahn (13) zur Teilung (t) versetzt zu einem benachbarten Eingriffszahn (12) angeordnet ist und drehmomentübertragende Zahnflanken aufweist.

2. Schiebemuffe (6) nach Anspruch 1, **dadurch gekennzeichnet, dass** der Begrenzungszahn (13) als ein geradverzahnter Zahn ausgebildet ist, welcher sich in axialer Richtung zu der Hauptachse (H) erstreckt.

3. Schiebemuffe (6) nach Anspruch 1 oder 2, **dadurch gekennzeichnet, dass** der Begrenzungszahn (13) mit einem Abstand in Umlaufrichtung zwischen einer 1,1-fachen Teilung (t) und einer 1,9-fachen Teilung (t) zu einem benachbarten Eingriffszahn (12) angeordnet ist.

4. Schiebemuffe (6) nach einem der vorhergehenden Ansprüche, **dadurch gekennzeichnet, dass** der Begrenzungszahn (13) mit einem Abstand in Umlaufrichtung von einer 1,5-fachen Teilung zu dem benachbarten Eingriffszahn (12) angeordnet ist.

5. Schiebemuffe (6) nach einem der vorhergehenden Ansprüche, **dadurch gekennzeichnet, dass** der Begrenzungszahn (13) im Vergleich zu einem der Eingriffszähne (12) in mindestens einer axialen Richtung verkürzt ist.

6. Schiebemuffe (6) nach einem der vorhergehenden Ansprüche, **dadurch gekennzeichnet, dass** der Begrenzungszahn (13) in mindestens einer axialen Richtung eine Begrenzungsfläche (15) aufweist.

7. Schiebemuffe (6) nach Anspruch 6, **dadurch gekennzeichnet, dass** sich die Begrenzungsfläche (15) in einer Radialebene zu der Hauptachse (H) erstreckt.

8. Synchronisierungseinrichtung (1) eines Getriebes mit
einer Schiebemuffe (6) nach einem der vorhergehenden Ansprüche,
mit einem Trägerkörper (4), wobei der Trägerkörper (4) eine Trägerverzahnung (5) aufweist, welche als eine Außenverzahnung ausgebildet ist und mit den Eingriffszähnen (12) zur Drehmomentübertragung in Eingriff steht,
und mit mindestens einem Kupplungsabschnitt (10), wobei der Kupplungsabschnitt (10) eine Kupplungsverzahnung (11) trägt, wobei die Kupplungsverzahnung (11) in der Teilung (t) der Eingriffszähne (12) angeordnet ist.

9. Synchronisierungseinrichtung (1) bzw. Klauenkupplung nach Anspruch 8, **dadurch gekennzeichnet, dass** die Trägerverzahnung (5) mit dem mindestens einen Begrenzungszahn (13) zur Drehmomentübertragung in Eingriff steht.

10. Synchronisierungseinrichtung (1) nach Anspruch 8 oder 9, **dadurch gekennzeichnet, dass** das Drehmoment gleichmäßig auf die Zähne (9) der Schaltmuffe (6) verteilt ist, wobei die Zähne die Eingriffszähne (12) sowie den mindestens einen Begrenzungszahn (13) umfassen.

## Claims

1. A sliding sleeve (6) for a synchronising device (1) or dog clutch of a transmission,
wherein the sliding sleeve (6) is designed as an annular body and defines a main axis (H), wherein pitch positions (T) are defined on the annular body, wherein the pitch positions (T) are distributed regularly around the main axis (H) at a distance of one pitch (t),
comprising a plurality of engagement teeth (12), which are designed as internal teeth, wherein each of the engagement teeth (12) is arranged at a pitch position (T),
wherein the sliding sleeve (6) has at least one engagement region (14), in which at least two engagement teeth (12) are arranged at pitch positions (T) which are adjacent in the circumferential direction,
comprising at least one limiting tooth (13) for limiting an axial movement of the sliding sleeve (6), wherein the limiting tooth (13), at least in some regions, is arranged in a gap between two pitch positions (T), wherein
the tooth profile in a sectional plane, which extends centrally with respect to an axial direction through the limiting tooth (13), is identical in the limiting tooth (13) and in at least one of the engagement teeth (12),
**characterised in that**
the limiting tooth (13) for the pitch (t) is arranged offset with respect to an adjacent engagement tooth (12) and has torque-transmitting tooth flanks.

2. The sliding sleeve (6) according to claim 1, **characterised in that** the limiting tooth (13) is designed as a straight-toothed tooth which extends in the axial direction with respect to the main axis (H).

3. The sliding sleeve (6) according to claim 1 or 2, **characterised in that** the limiting tooth (13) is arranged with a distance in the circumferential direction between 1.1 times the pitch (t) and 1.9 times the pitch (t) with respect to an adjacent engagement tooth (12).

4. The sliding sleeve (6) according to one of the preceding claims, **characterised in that** the limiting tooth (13) is arranged at a distance in the circumferential direction of 1.5 times the pitch with respect to the adjacent engagement tooth (12).

5. The sliding sleeve (6) according to one of the preceding claims, **characterised in that** the limiting tooth (13) is shortened in at least one axial direction in comparison with one of the engagement teeth (12).

6. The sliding sleeve (6) according to one of the preceding claims, **characterised in that** the limiting tooth (13) has a limiting surface (15) in at least one axial direction.

7. The sliding sleeve (6) according to claim 6, **characterised in that** the limiting surface (15) extends in a radial plane with respect to the main axis (H).

8. A synchronising device (1) of a transmission, comprising
a sliding sleeve (6) according to one of the preceding claims,
comprising a carrier body (4), wherein the carrier body (4) has a carrier toothing (5) which is designed as an external toothing and is in engagement with the engagement teeth (12) for torque transmission,
and comprising at least one coupling section (10), wherein the coupling section (10) carries a coupling toothing (11), wherein the coupling toothing (11) is arranged in the pitch (t) of the engagement teeth (12).

9. The synchronising device (1) or dog clutch according to claim 8, **characterised in that** the carrier toothing (5) is in engagement with the at least one limiting tooth (13) for torque transmission.

10. The synchronising device (1) according to claim 8 or 9, **characterised in that** the torque is evenly distributed over the teeth (9) of the sliding sleeve (6), wherein the teeth comprise the engagement teeth (12) and the at least one limiting tooth (13).

## Revendications

1. Manchon coulissant (6) pour dispositif de synchronisation (1) ou embrayage à crabots d'une boîte de vitesses,
le manchon coulissant (6) étant conçu comme un corps annulaire définissant un axe principal (H), des positions de pas (T) étant définies sur le corps annulaire, les positions de pas (T) étant réparties régulièrement autour de l'axe principal (H) à distance d'un pas (t),
avec une pluralité de dents d'engrènement (12) conçues comme des dents intérieures, chacune des dents d'engrènement (12) étant disposée sur une position de pas (T),
le manchon coulissant (6) présentant au moins une zone d'engrènement (14), dans laquelle au moins deux dents d'engrènement (12) sont disposées sur des positions de pas (T) adjacentes dans a direction périphérique,
avec au moins une dent de limitation (13) pour limiter un mouvement axial du manchon coulissant (6), la dent de limitation (13) étant disposée au moins par endroits dans un intervalle entre deux positions de pas (T),
le profil de dent dans un plan de coupe, lequel s'étend de manière centrale à travers la dent de limitation (13) par rapport à une direction axiale, est réalisé de manière identique pour la dent de limitation (13) et pour au moins une des dents d'engrènement (12),
**caractérisé en ce que**
la dent de limitation (13) est disposée en quinconce pour le pas (t) par rapport à une dent d'engrènement (12) adjacente et présente des flancs de dent transmettant le couple.

2. Manchon coulissant (6) selon la revendication 1, **caractérisé en ce que** la dent de limitation (13) est conçue comme une dent à denture droite, laquelle s'étend dans la direction axiale vers l'axe principal (H).

3. Manchon coulissant (6) selon la revendication 1 ou 2, **caractérisé en ce que** la dent de limitation (13) est disposée à une distance comprise entre un pas (t) de 1,1 fois et un pas (t) de 1,9 fois dans la direction périphérique d'une dent d'engrènement (12) adjacente.

4. Manchon coulissant (6) selon l'une quelconque des revendications précédentes, **caractérisé en ce que** la dent de limitation (13) est disposée à une distance d'un pas de 1,5 fois dans la direction périphérique de la dent d'engrènement adjacente (12).

5. Manchon coulissant (6) selon l'une quelconque des revendications précédentes, **caractérisé en ce que** la dent de limitation (13) est raccourcie par rapport à l'une des dents d'engrènement (12) dans au moins une direction axiale.

6. Manchon coulissant (6) selon l'une quelconque des revendications précédentes, **caractérisé en ce que** la dent de limitation (13) présente une surface de limitation (15) dans au moins une direction axiale.

7. Manchon coulissant (6) selon la revendication 6, **caractérisé en ce que** la surface de limitation (15) s'étend vers l'axe principal (H) dans un plan radial.

8. Dispositif de synchronisation (1) d'une boîte de vitesses avec
un manchon coulissant (6) selon l'une quelconque des revendications précédentes,
avec un corps porteur (4), le corps porteur (4) présentant une denture porteuse (5), laquelle est conçue comme une denture extérieure et est en prise avec les dents d'engrènement (12) pour transmettre le couple,
et avec au moins une section d'embrayage (10), la section d'embrayage (10) portant une denture d'embrayage (11), la denture d'embrayage (11) étant disposée dans le pas (t) des dents d'engrènement (12).

9. Dispositif de synchronisation (1) ou embrayage à crabots selon la revendication 8, **caractérisé en ce que** la denture porteuse (5) est en prise avec au moins une dent de limitation (13) pour transmettre le couple.

10. Dispositif de synchronisation (1) selon la revendication 8 ou 9, **caractérisé en ce que** le couple est réparti uniformément sur les dents (9) du manchon de changement de vitesse (6), les dents comprenant les dents d'engrènement (12) et au moins une dent de limitation (13).
